# EUROPÄISCHE PATENTSCHRIFT

(11) **EP 1 982 494 B1**
(45) Veröffentlichungstag und Bekanntmachung des Hinweises auf die Patenterteilung: **14.10.2015**
(21) Anmeldenummer: 07704181.2
(22) Anmeldetag: 26.01.2007
(51) Int. Cl.: H04L 29/06

(54) **VERFAHREN, VORRICHTUNG UND COMPUTERPROGRAMMPRODUKT ZUM VERSCHLÜSSELTEN ÜBERTRAGEN VON MEDIENDATEN ZWISCHEN DEM MEDIENSERVER UND DEM TEILNEHMERGERÄT**
METHOD, DEVICE AND COMPUTER PROGRAM PRODUCT FOR THE ENCODED TRANSMISSION OF MEDIA DATA BETWEEN THE MEDIA SERVER AND THE SUBSCRIBER TERMINAL
PROCÉDÉ, DISPOSITIF ET PRODUIT-PROGRAMME INFORMATIQUE PERMETTANT LA TRANSMISSION CODÉE DE DONNÉES MULTIMÉDIA ENTRE LE SERVEUR MULTIMÉDIA ET LE TERMINAL UTILISATEUR

(30) Priorität: 09.02.2006 DE 102006006071
(43) Veröffentlichungstag der Anmeldung: 22.10.2008
(73) Patentinhaber: Siemens Aktiengesellschaft, 80333 München (DE)
(72) Erfinder: BÜCKER, Wolfgang, 85579 Neubiberg (DE); THIRUVENGADAM, Srinath, 86609 Donauwörth (DE)
(86) Internationale Anmeldenummer: PCT/EP2007/050792
(87) Internationale Veröffentlichungsnummer: WO 2007/090745

(56) Entgegenhaltungen:
- "Digital cellular telecommunications system (Phase 2+); Universal Mobile Telecommunications System (UMTS); 3G Security; Security of Multimedia Broadcast/Multicast Service (MBMS) (3GPP TS 33.246 version 6.5.0 Release 6); ETSI TS 133 246" ETSI STANDARDS, EUROPEAN TELECOMMUNICATIONS STANDARDS INSTITUTE, SOPHIA-ANTIPO, FR, Bd. 3-SA3, Nr. V650, Dezember 2005 (2005-12), Seiten 1-59, XP014032881 ISSN: 0000-0001
- "Universal Mobile Telecommunications System (UMTS); Generic Authentication Architecture (GAA); Generic bootstrapping architecture (3GPP TS 33.220 version 6.7.0 Release 6); ETSI TS 133 220" ETSI STANDARDS, EUROPEAN TELECOMMUNICATIONS STANDARDS INSTITUTE, SOPHIA-ANTIPO, FR, Bd. 3-SA3, Nr. V670, Dezember 2005 (2005-12), Seiten 1-42, XP014032874 ISSN: 0000-0001
- "Universal Mobile Telecommunications System (UMTS); Transparent end-to-end Packet-switched Streaming Service (PSS); Protocols and codecs (3GPP TS 26.234 version 6.6.0 Release 6); ETSI TS 126 234" ETSI STANDARDS, EUROPEAN TELECOMMUNICATIONS STANDARDS INSTITUTE, SOPHIA-ANTIPO, FR, Bd. 3-SA4, Nr. V660, Dezember 2005 (2005-12), Seiten 1-128, XP014032641 ISSN: 0000-0001
- ARKKO E CARRARA F LINDHOLM M NASLUND K NORRMAN ERICSSON RESEARCH J: "MIKEY: Multimedia Internet KEYing" IETF STANDARD, INTERNET ENGINEERING TASK FORCE, IETF, CH, August 2004 (2004-08), Seiten 1-67, XP015009608 ISSN: 0000-0003

## Beschreibung

Die Erfindung betrifft ein Verfahren zum Übertragen von Mediendaten über ein Zugangsnetzwerk. Die Erfindung betrifft außerdem eine Netzwerkanordnung und ein Computerprogrammprodukt, die zur Ausführung des Verfahrens geeignet sind.

Verschiedene Verfahren, Geräte und Systeme zur Übertragung von Mediendaten über ein Zugangsnetzwerk an beziehungsweise von einem Teilnehmergerät sind bekannt. Beispielsweise sehen die so genannten H.-Standards (z.B. H.320, H.323, H.324) Kompressions- und Steuermechanismen für eine Echtzeitübertragung von Audio- und Videodaten vor, insbesondere für die Videotelefonie.

Mit der zunehmenden Verbreitung von Breitbandmobilfunknetzen hat das Third Generation Partnership Project (3GPP) eine Reihe von Standards zur Integration von Sprach- und Internetdiensten unter dem Namen IP-Multimediasubsystem (IMS) entwickelt. Die IMS-Standards sollen die Verschmelzung von paket- und leitungsvermittelnden Netzwerken, insbesondere im mobilen Bereich, vorantreiben. IMS-Systeme eignen sich jedoch auch zur Übertragung von Mediendaten in Festnetzen, beispielsweise über öffentliche Telefonnetzwerke oder das Internet.

Bei Mobilfunknetzwerken gemäß dem 3GPP UMTS Terrestrial Radio Access Network (UTRAN) Standard werden Daten auf Ebene der Sicherungsschicht des Netzwerkprotokolls verschlüsselt. Daher sehen die IMS Access Security (3GPP TS 33.203) und Network Domain Security (3GPP TS 33.210) Standards keine separate Verschlüsselung von Mediendaten vor. In Festnetzen findet eine solche Verschlüsselung von übertragenen Daten jedoch nicht statt.

Oftmals ist eine Verschlüsselung von Mediendaten jedoch erwünscht. Denn zum einen sind insbesondere IP-basierte Netzwerke notorisch unsicher, sodass beispielsweise Videotelefongespräche, die zumindest teilweise über IP-Netzwerke geführt werden, verhältnismäßig leicht abgehört werden können. Zum anderen werden Mediendaten oftmals als so genannte Mehrwertdienste, wie beispielsweise Video-on-Demand, angeboten, bei denen der Empfänger für übertragende Daten bezahlen muss. Auch hierbei muss sichergestellt werden, dass die übertragenen Mediendaten nur vom rechtmäßigen Empfänger genutzt werden.

Aus dem Standard ETSI TS 133 246 V6.5.0 Release 6 ("Security of Multimedia Broadcast/Multicast Service (MBMS), ist ein Verfahren zum Übertragen von verschlüsselten Mediendaten von einem Broadcast-Multicast Service Centre an ein Teilnehmergerät bekannt.

Aus dem Secure Real-time Transport Protocol (SRTP, entsprechend RFC 3711) ist ein Standard zur sicheren Übertragung von Mediendaten zwischen zwei Teilnehmern bekannt. Eine Datenübertragung nach dem SRTP-Standard lässt sich aber insbesondere in heterogenen Netzwerken nicht einsetzen. Denn teilweise kommt es an Netzwerkgrenzen, etwa beim Übergang vom Internet zu öffentlichen Telefonnetzen, zu technischen Problemen bei der Umsetzung von verschlüsselten Datenströmen. Zum anderen müssen gesetzliche Bestimmungen beachtet werden, die beispielsweise eine staatliche Überwachung von Telefongesprächen regeln. Auch ist ein direkter Schlüsselaustausch zwischen zwei Teilnehmern oft problematisch, wenn kein Vertrauensverhältnis zwischen ihnen besteht.

Es ist daher Aufgabe der Erfindung, ein Verfahren und eine Netzwerkanordnung zur beschreiben, die eine Verschlüsselung von Mediendaten in einem Zugangsnetzwerk ermöglicht. Dabei soll insbesondere eine Übertragung zwischen einer Vermittlungsstelle eines leitungsgebundenen Netzwerks und einem Teilnehmer des leitungsgebundenen Netzwerkes geschützt werden.

Die Aufgabe wird erfindungsgemäß durch ein Verfahren zum Übertragen von Mediendaten gelöst, das die folgenden Schritte aufweist:
- Übertragen einer Anfrage von einem Teilnehmergerät über einen Steuerkanal eines Zugangsnetzwerks an eine Anwendungsfunktion zum Festlegen eines Satzes von Verschlüsselungsparametern,
- Erzeugen eines Verschlüsselungskontextes in Abhängigkeit des Satzes von Verschlüsselungsparametern durch die Anwendungsfunktion,
- Übertragen des Verschlüsselungskontextes von der Anwendungsfunktion an einen Medienserver über eine Steuerschnittstelle eines Kernnetzwerkes,
- Verschlüsseln von unverschlüsselten Mediendaten durch den Medienserver unter Verwendung des Verschlüsselungskontextes, und
- Übertragen der verschlüsselten Mediendaten von dem Medienserver über einen Datenkanal des Zugangsnetzwerks an das Teilnehmergerät.

Gemäß dem Verfahren wird zunächst ein Satz von Verschlüsselungsparametern von.dem Teilnehmergerät an eine Anwendungsfunktion über einen Steuerkanal übertragen oder über diesen ausgehandelt. Dieser Vorgang kann beispielsweise beim Aufbau einer Verbindung von dem Teilnehmergerät ausgeführt werden. Aus dem übertragenen Satz von Verschlüsselungsparametern erzeugt die Anwendungsfunktion einen Verschlüsselungskontext, der zur Verschlüsselung von Mediendaten geeignet ist. Dieser Verschlüsselungskontext wird in einem weiteren Schritt über eine Steuerschnittstelle eines Kernnetzwerkes an einen Medienserver übertragen, sodass der Medienserver in einem weiteren Schritt von ihm an das Teilnehmergerät verschickte Mediendaten verschlüsseln kann. Dazu ist es nicht notwendig, dass der Medienserver und das Teilnehmergerät einen eigenen Schlüssel zur Verschlüsselung der Mediendaten aushandeln.

Die Aufgabe wird ebenfalls durch ein Verfahren gemäß dem Patentanspruch 2 gelöst, bei dem eine Entschlüsselung verschlüsselter Mediendaten unter Verwendung des Verschlüsselungskontextes durch den Medienserver durchgeführt wird.

Auf diese Weise sind auch in umgekehrter Richtung über das Zugangsnetzwerk übertragen Mediendaten durch Verschlüsselung geschützt, ohne dass es dazu eines direkten Schlüsselaustausches zwischen dem Medienserver und dem Teilnehmergerät bedarf.

Gemäß einer vorteilhaften Ausgestaltung der Erfindung wird der Satz von Verschlüsselungsparametern unter Verwendung eines ersten Schlüssels durch das Teilnehmergerät erzeugt und unter Verwendung eines zweiten Schlüssels durch die Anwendungsfunktion überprüft.

Durch die Erzeugung von Verschlüsselungsparametern in Abhängigkeit des ersten Schlüssels des Teilnehmergerätes kann zugleich mit der Erzeugung des Verschlüsselungskontextes auch eine Authentifizierung des Teilnehmergerätes durch den zweiten Schlüssel vorgenommen werden.

Gemäß einer weiteren vorteilhaften Ausgestaltung der Erfindung sind das Teilnehmergerät und die Anwendungsfunktion zum Ausführen eines Sitzungsinitiierungsprotokolls eingerichtet und der Satz von Verschlüsselungsparametern wird durch Austausch von Nachrichten nach dem Sitzungsinitiierungsprotokoll festgelegt.

Ein Teilnehmergerät und eine Anwendungsfunktion, die zum Ausführen von Sitzungsinitiierungsprotokollen eingerichtet sind, können solche Protokolle, die beispielsweise zur Authentifizierung eines Teilnehmergerätes gegenüber einer Vermittlungsstelle dienen, auch zum Festlegen des Satzes von Verschlüsselungsparameters nutzen.

Gemäß einer weiteren vorteilhaften Ausgestaltung der Erfindung weist das Verfahren zusätzlich die Schritte einer Überprüfung einer Authentifizierung des Teilnehmergerätes durch die Anwendungsfunktion und ein Übertragen von Authentifizierungsdaten von der Anwendungsfunktion über die Steuerschnittstelle an den Medienserver auf.

Durch die Überprüfung und Übertragung von Authentifizierungsdaten durch die Anwendungsfunktion kann festgestellt werden, ob ein Teilnehmergerät zum Empfangen von Mediendaten berechtigt ist.

Die Aufgabe wird ebenfalls durch eine Netzwerkanordnung nach Anspruch 7 und ein Computerprogrammprodukt nach Anspruch 10 gelöst.

Weitere Einzelheiten und Ausgestaltungen der Erfindung sind in den Unteransprüchen angegeben.

Die Erfindung wird nachfolgend an einem Ausführungsbeispiel anhand der Zeichnungen näher erläutert. In den Zeichnungen zeigen:
- Figur 1: eine Netzwerkanordnung, aufweisend zwei Teilnehmergeräte und eine Vermittlungsstelle,
- Figur 2: ein Sequenzdiagramm für eine Übertragung von Mediendaten zwischen einem ersten Teilnehmergerät und einem zweiten Teilnehmergerät,
- Figur 3: ein Flussdiagramm gemäß einer Ausgestaltung eines Verfahrens zum Übertragen von Mediendaten.

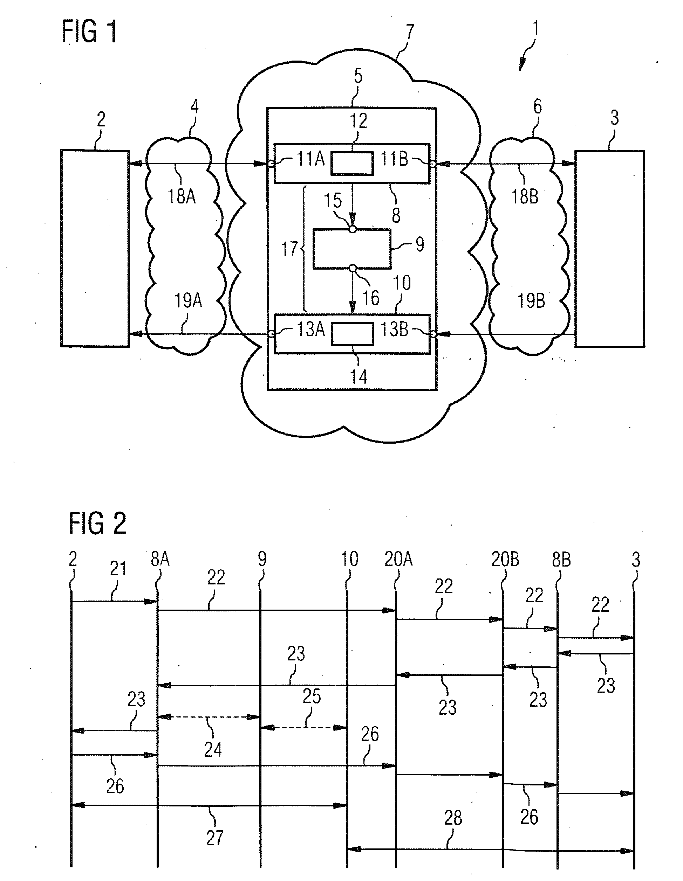

Figur 1 zeigt eine Netzwerkanordnung 1, aufweisend ein erstes Teilnehmergerät 2, ein zweites Teilnehmergerät 3 und eine Vermittlungsstelle 5.

Das erste Teilnehmergerät 2 ist über ein erstes Zugangsnetzwerk 4 mit der Vermittlungsstelle 5 verbunden. Das zweite Teilnehmergerät 3 ist über ein zweites Zugangsnetzwerk 6 ebenfalls mit der Vermittlungsstelle 5 verbunden.

Die Vermittlungsstelle 5 liegt in einem Kernnetzwerk 7 und umfasst eine Anwendungsfunktion 8, eine Entscheidungsfunktion 9 und einen Medienserver 10.

Die Anwendungsfunktion 8 weist zwei erste Schnittstellew 11A und 11B zu dem ersten Teilnehmergerät 2 beziehungsweise dem zweiten Teilnehmergerät 3 auf. Des Weiteren weist die Anwendungsfunktion 8 eine Schlüsseleinheit 12 auf. Die Schlüsseleinheit 12 dient unter anderem zum Erzeugen, Aushandeln oder Überprüfen von Sitzungsschlüsseln.

Der Medienserver 10 weist zwei zweite Schnittstellen 13A und 13B auf, über die der Medienserver 10 mit dem ersten Teilnehmergerät 2 bzw. dem zweiten Teilnehmergerät 3 verbunden ist. Des Weiteren weist der Medienserver 10 eine zweite verschlüsselungseinheit 14 auf, die dazu geeignet ist, Mediendaten zu verschlüsseln bzw. zu entschlüsseln.

Die Anwendungsfunktion 8 ist über eine dritte Schnittstelle 15 mit der Entscheidungsfunktion 9 verbunden. Die Entscheidungsfunktion 9 ist über eine vierte Schnittstelle 16 mit dem Medienserver 10 verbunden. Zusammen bilden die dritte Schnittstelle 15, die Entscheidungsfunktion 9 und die vierte Schnittstelle 16 eine Steuerschnittstelle 17, über welche der Medienserver 10 von der Anwendungsfunktion 8 steuerbar ist.

Im Falle von IMS stellt die Anwendungsfunktion 8 selbst keine Anwendung bereit sondert steuert die für eine Anwendung benötigen Ressourcen. Beispielsweise kann die Anwendungsfunktion 8 zusammen mit der Entscheidungsfunktion 9 während einer Verbindungsaufbauphase Übertragungskapazitäten in dem Kernnetzwerk 7 reservieren, die in einer nachfolgenden Übertragungsphase durch den Medienserver 10 zum Übertragen von Mediendaten genutzt werden.

Das erste Zugangsnetzwerk 4 umfasst einen Steuerkanal 18A zwischen dem ersten Teilnehmergerät 2 und der ersten Schnittstelle 11A der Anwendungsfunktion 8 sowie einen Datenkanal 19A zwischen der zweiten Schnittstelle 13A des Medienservers 10 und dem ersten Teilnehmergerät 2. Ebenso umfasst das zweite Zugangsnetzwerk 6 einen Steuerkanal 18B zwischen dem zweiten Teilnehmergerät 3 und der ersten Schnittstelle 11B sowie einem Datenkanal 19B zwischen der zweiten Schnittstelle 13B und dem zweiten Teilnehmergerät 3.

Im dargestellten Ausführungsbeispiel sind sowohl die Steuerkanäle 18 als auch die Datenkanäle 19 zur bidirektionalen Kommunikation geeignet. Grundsätzlich ist es jedoch auch möglich, dass eine Kommunikation nur in einer Richtung möglich ist bzw. eine Kommunikation für unterschiedliche Datenflussrichtungen auf unterschiedlichen Übertragungskanälen 18 bzw. 19 ablaufen.

Bei dem Steuerkanal 18 und dem Datenkanal 19 kann es sich beispielsweise um Datenverbindungen auf unterschiedlichen Protokollebenen auf einem einzelnen Übertragungskanal zwischen der Vermittlungsstelle 5 und den Teilnehmergeräten 2 bzw. 3 handeln oder um getrennte Übertragungskanäle wie beispielsweise einem so genannten ISDN-Steuerkanal D und einem so genannten ISDN-Datenkanal B.

Der Einfachheit halber sind das erste Teilnehmergerät 2 und das zweite Teilnehmergerät 3 in der Figur 1 an eine einzelne Vermittlungsstelle 5 angeschlossen dargestellt. Selbstverständlich kann das Kernnetzwerk 7 jedoch eine Vielzahl von Vermittlungsstellen 5 aufweisen, wobei das erste Teilnehmergerät 2 an eine erste Vermittlungsstelle und das zweite Teilnehmergerät 3 an eine zweite Vermittlungsstelle angeschlossen ist. Auch ist es möglich, das weitere zwischengeordnete Netzwerke zwischen dem ersten Teilnehmergerät 2, der Vermittlungsstelle 5 und dem zweiten Teilnehmergerät 3 vorhanden sind, die jedoch in der Figur 1 ebenfalls nicht dargestellt sind.

Bei dem ersten Zugangsnetzwerk 4 handelt es sich beispielsweise um ein leitungsgebundenes, öffentliches Telefonnetzwerk wie beispielsweise ein analoges Telefonnetzwerk oder ein digitales ISDN-Telefonnetzwerk. Bei dem zweiten Zugangsnetzwerk 6 handelt es sich beispielsweise um ein drahtloses Mobilfunknetzwerk, wie beispielsweise ein GSM- oder UMTS-Netzwerk. Bei dem Kernnetzwerk 7 handelt es sich beispielsweise um ein Datennetzwerk nach dem Internetprotokoll (IP), das ein Anbieter von Kommunikationsdienstleistungen zur internen Datenübertragung nutzt.

In dem beschriebenen Ausführungsbeispiel soll eine Verbindung zwischen dem ersten Teilnehmergerät 2 und dem zweiten Teilnehmergerät 3 über die Vermittlungsstelle 5 hergestellt werden. Dabei sollen Mediendaten, wie beispielsweise ein kombinierter Audio- und Videodatenstrom, in Echtzeit zwischen dem ersten Teilnehmergerät 2 und dem zweiten Teilnehmergerät 3 ausgetauscht werden.

Da es sich bei dem ersten Zugangsnetzwerk 4 um ein leitungsgebundenes Telefonnetzwerk handelt, sollen die Mediendaten, die von dem Medienserver 10 über den Datenkanal 19A zu dem ersten Teilnehmergerät 2 übertragen werden, verschlüsselt werden. Die Mediendaten, die von dem zweiten Teilnehmergerät 3 zu dem Medienserver 10 über den Datenkanal 19B übertragen werden, brauchen in dem gegebenen Beispiel zwar nicht verschlüsselt zu werden, weil es sich bei dem zweiten Zugangsnetzwerk 6 um ein Funknetzwerk handelt, bei dem Verschlüsselung bereits auf der Sicherungsebene des Netzwerkprotokolls eingesetzt wird. Dennoch kann auch in dem zweiten Zugangsnetzwerk 6 ein äquivalentes Verfahren zur verschlüsselten Datenübertragung angewendet werden.

Figur 2 zeigt ein Sequenzdiagramm für einen Verbindungsaufbau und eine nachfolgende Übertragung von Mediendaten zwischen dem ersten Teilnehmergerät 2 und dem zweiten Teilnehmergerät 3.

In einem IMS übernimmt eine so genannte Proxy Call Session Control Function (P-CSCF), die den ersten Kontaktpunkt des ersten Teilnehmergerätes 2 in dem Kernnetzwerk 7 darstellt, die Funktionalität einer ersten Anwendungsfunktion 8A für das erste Teilnehmergerät 2. Dem zweiten Teilnehmergerät 3 ist eine eigene P-CSCF zugeordnet, die diesem Teilnehmergerät 3 als zweite Anwendungsfunktion 8B dient. Dazwischen sind zusätzlich noch Kontrollfunktionen 20A und 20B, so genannte Serving Call Session Control Functions (S-CSCF), angeordnet, welche die Dienste für das erste Teilnehmergerät 2 bzw. das zweite Teilnehmergerät 3 kontrollieren.

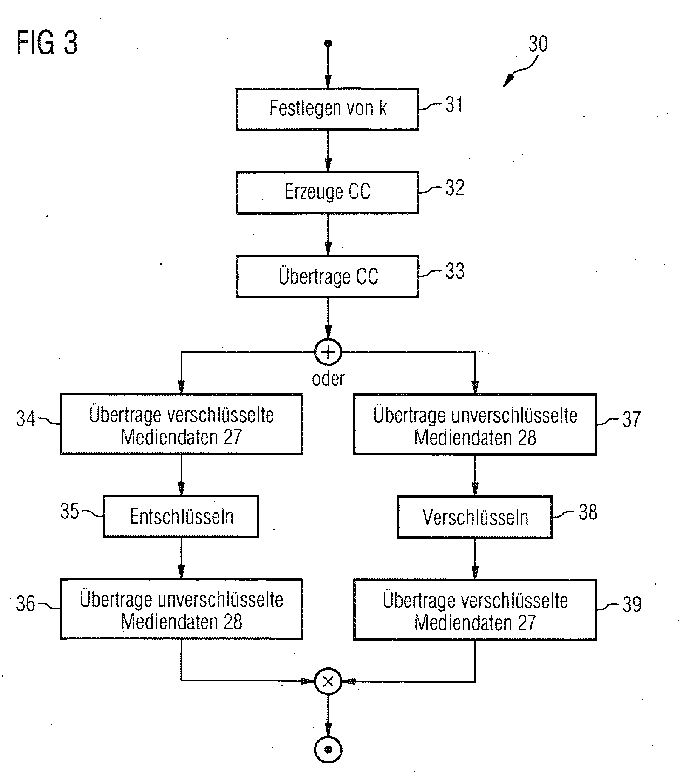

Die beispielhafte Datenübertragung gemäß Figur 2 wird anhand eines in Figur 3 dargestellten Flussdiagramms näher erläutert. Figur 3 zeigt ein Verfahren 30 zum Übertragen von Mediendaten.

In einem Schritt 31 wird ein Satz von Verschlüsselungsparametern k, der eine zu verwendende Verschlüsselung bestimmt, zwischen dem ersten Teilnehmergerät 2 und der erste Anwendungsfunktion 8A festgelegt.

Beispielsweise kann das erste Teilnehmergerät 2 einen Sitzungsschlüssel basierend auf einem geheimen Schlüssel des ersten Teilnehmergerätes 2 erzeugen und an die erste Anwendungsfunktion 8A übertragen. Grundsätzlich lassen sich eine Vielzahl von dem Fachmann bekannten, unterschiedlichen Verfahren zum Erzeugen von Verschlüsselungsparametern k zur symmetrischen oder asymmetrischen Kommunikation in Verbindung mit dem beschriebenen Verfahren 30 zum Übertragen von Mediendaten verwenden.

In dem Schritt 31 können auch weitere Verschlüsselungsparameter, die beispielsweise eine Länge eines zu verwendenden Schlüssels festlegen, von dem ersten Teilnehmergerät 2 bestimmt oder mit Hilfe eines Sitzungsinitiierungsprotokolls zwischen dem ersten Teilnehmergerät 2 und der ersten Anwendungsfunktion 8A ausgehandelt werden. Als Sitzungsinitiierungsprotokoll kann beispielsweise das so genannte Session Initiation Protocol (SIP, entsprechend RFC 3261 und RFC 2543) in Verbindung mit dem Session Description Protocol (SDP, entsprechend RFC 2327) eingesetzt werden. Es ist auch möglich, dass einige oder alle Verschlüsselungsparameter von der ersten Anwendungsfunktion 8A festgelegt und an das Teilnehmergerät 2 übertragen werden.

Gemäß dem SIP-Protokoll findet zunächst ein Nachrichtenaustausch zwischen dem Teilnehmergerät 2 und der ersten Anwendungsfunktion 8A statt, der zum Registrieren des Teilnehmergerätes dient, in der Figur 2 jedoch nicht dargestellt ist. Nachfolgen wird eine Anfrage 21 von dem Teilnehmergerät 2 an die erste Anwendungsfunktion 8A übertragen. In dem Ausführungsbeispiel ist ein Satz von Verschlüsselungsparametern k in die Anfrage 21 integriert, die neben dem Satz von Verschlüsselungsparametern k weitere Daten wie beispielsweise eine Zieladresse zum Aufbau einer Verbindung enthält. Beispielsweise kann es sich um eine so genannte Invite-Anfrage nach dem Session Initiation Protocol handeln. Dieses Protokoll ist dem Hyper Text Transfer Protocol (HTTP) ähnlich und eignet sich zum Aufbau von Kommunikationssitzungen über Datennetzwerke, insbesondere dem Aufbau von Sprachverbindungen, beispielsweise in so genannten Voice-over-IP (VoIP) Netzen. Zusätzlich kann während dieser Phase auch eine Authentifizierung des Teilnehmergerätes 2 erfolgen, beispielsweise durch Verifizierung von Authentifizierungsdaten durch einen so genannten Home Subscriber Server (HSS), der in Figur 1 jedoch nicht dargestellt ist.

In Figur 2 ist zu erkennen, dass in dem dargestellten Ausführungsbeispiel die Anfrage 21 zunächst von dem ersten Teilnehmergerät 2 an die erste Anwendungsfunktion 8A übertragen wird. Dabei wird von dem ersten Teilnehmergerät 2 und der ersten Anwendungsfunktion 8A ein Protokoll verwendet, das zum Übertragen bzw. Aushandeln von Schlüsselinformationen geeignet ist. Beispielsweise kann der Satz von Verschlüsselungsparametern k über das Multimedia Internet KEYing (MIKEY, entsprechend RFC 3830) Protokoll als Nutzdaten einer SDP-Anfrage über das SIP-Protokoll an die erste Anwendungsfunktion 8A übertragen werden. Auf diese Weise erhält die erste Anwendungsfunktion 8A den Satz von Verschlüsselungsparametern k der Anfrage 21.

Weitere Teile der Anfrage 21, die nicht die Verschlüsselung betreffen, werden in Form einer modifizierten Anfrage 22 an die erste Kontrollfunktiönen 20A weitergeleitet. Gemäß dem IMS-Protokoll umfasst das Kernnetzwerk 7 jeweils eine S-CSCF für den ersten Teilnehmer 2 und den zweiten Teilnehmer 3, welche die modifizierte Anfrage 22 von der ersten Anwendungsfunktion 8A zu der zweiten Anwendungsfunktion 8B weiterleiten, um eine Verbindung mit dem zweiten Teilnehmergerät 3 aufzubauen.

Ist das zweite Teilnehmergerät 3 dazu bereit, die modifizierte Anfrage 22 zu beantworten, sendet das zweite Teilnehmergerät 3 eine Rückantwort 23 aus, die in umgekehrter Richtung zurück zu der ersten Anwendungsfunktion 8A übertragen wird. Im Fall des SIP-Protokolls handelt es sich dabei beispielsweise um den Antwortcode "200 OK" sowie weitere Nachrichten, die der Einfachheit halber in der Figur 2 jedoch nicht dargestellt sind.

In einem weiteren Schritt 32 erzeugt die erste Anwendungsfunktion 8A einen Verschlüsselungskontext CC basierend auf dem Satz von Verschlüsselungsparametern k, der im Schritt 31 festgelegt wurde. Der Verschlüsselungskontext CC umfasst beispielsweise einen zu verwendenden Verschlüsselungsalgorithmus, einen zur Verschlüsselung zu verwendenden Schlüssel und weitere Parameter, die zum korrekten Durchführen einer Verschlüsselung benötigt werden.

Im Schritt 33 wird der erzeugte Verschlüsselungskontext CC von der ersten Anwendungsfunktion 8A an den Medienserver 10 übertragen.

In der in Figur 1 dargestellten Anordnung wird der erzeugte Verschlüsselungskontext CC zunächst von der Anwendungsfunktion 8 zu der Entscheidungsfunktion 9 übertragen. Dazu wird der Verschlüsselungskontext CC über die dritte Schnittstelle 15 übertragen, im Ausführungsbeispiel eine so genannte Gq-Schnittstelle gemäß 3GPP-Standards bzw. eine Gq'-Schnittstelle gemäß Spezifikation des Next Generation Networks (NGN) der Projektgruppe Telecommunications and Internet converged Services and Protocols for Advanced Networking (TISPAN) des European Telecommunications Standards Institute (ETSI) nach dem Diameterprotokoll (RFC 3588).

Das Diameterprotokoll ist zum Übertragen von so genannten Attribut-Werte-Paaren geeignet. Daher muss die erste Anwendungsfunktion 8A den Verschlüsselungskontext CC in einem Satz von Attribut-Werte-Paaren als ersten codierten Verschlüsselungskontext 24 codieren. Dabei können entweder bereits vorhandene Attribute zum Übertragen des Verschlüsselungskontextes CC verwendet werden oder neue Attribute können von der ersten Anwendungsfunktion 8A eingeführt werden.

Die Entscheidungsfunktion 9, genannt die Service Based Policy Decision Function (SPDF bzw. PDF) im TISPAN bzw. 3GPP-Standard decodiert den übertragenen ersten codierten Verschlüsselungskontext 24 und überträgt die darin enthaltenen Informationen als zweiten codierten Verschlüsselungskontext 25 über die vierte Schnittstelle 16 an den Medienserver 10. In dem Ausführungsbeispiel handelt es sich bei der vierten Schnittstelle 16 gemäß TISPAN-Standard um eine so genannte Ia-Schnittstelle nach dem H.248-Protokoll.

Nach dem Übertragen des Verschlüsselungskontextes CC von der ersten Anwendungsfunktion 8A an den Medienserver 10 leitet die erste Anwendungsfunktion 8A die Rückantwort 23 an das erste Teilnehmergerät 2 weiter. Gemäß dem 3GPP-Protokoll TS24.229 bestätigt das erste Teilnehmergerät 2 den Aufbau der Verbindung gegenüber der ersten Anwendungsfunktion 8A mit Hilfe einer Bestätigungsnachricht 26, die ebenfalls an das zweite Teilnehmergerät 3 weitergeleitet wird.

In einem weiteren Schritt 34 überträgt das erste Teilnehmergerät 2 verschlüsselte Mediendaten 27 an den Medienserver 10 bzw. der Medienserver 10 überträgt verschlüsselte Mediendaten 27 an das erste Teilnehmergerät 2.

Das erste Teilnehmergerät 2 kann unter Verwendung des Satzes von Verschlüsselungsparameters k einen zu dem im Schritt 33 an den Medienserver 10 übertragenen äquivalenten Verschlüsselungskontext CC erzeugen. Damit sind sowohl das erste Teilnehmergerät 2 als auch der Medienserver 10 dazu in der Lage, Mediendaten zu ver- bzw. entschlüsseln. Insbesondere bei umfangreichen Datenströmen wie sie beispielsweise in der Videotelefonie anfallen, eignen sich hierzu symmetrisches Verschlüsselungsverfahren. Beispielsweise kann ein Datenstrom mit Hilfe einer XOR-Funktion mit einem hinreichend langen Schlüssel verknüpft werden.

In dem in Figur 2 dargestellten Datenflussdiagramm fließen die verschlüsselten Mediendaten 27 von dem ersten Teilnehmergerät 2 zu dem Medienserver 10. Der Medienserver 10, der seinerseits im Besitz des Verschlüsselungskontextes CC ist, kann die empfangenen verschlüsselten Mediendaten 27 entschlüsseln und erzeugt auf diesem Weg im Schritt 35 unverschlüsselte Mediendaten 28.

In einem Schritt 36 werden die unverschlüsselten Mediendaten 28 von dem Medienserver 10 an das zweite Teilnehmergerät 3 übertragen.

Wie in der Figur 3 dargestellt ist, ist selbstverständlich auch ein Datenfluss in der umgekehrten Richtung, nämlich von dem zweiten Teilnehmergerät 3 zu dem ersten Teilnehmergerät 2, möglich. Dabei werden zuerst unverschlüsselte Mediendaten 28 im Schritt 37 an den Medienserver 10 übertragen. In einem weiteren Schritt 38 verschlüsselt der Medienserver 10 die unverschlüsselten Mediendaten 28 und erzeugt so verschlüsselte Mediendaten 27. Im Schritt 39 werden die verschlüsselten Mediendaten 27 an das erste Teilnehmergerät 2 übertragen.

Bei bidirektionalen Kommunikationsanwendungen wie der Videotelefonie werden beide oben beschriebenen Varianten oftmals parallel zueinander ausgeführt, sodass von dem ersten Teilnehmergerät 2 ausgehende verschlüsselte Mediendaten 27 durch den Medienserver in dem Schritt 35 entschlüsselt werden und gleichzeitig an das erste Teilnehmergerät 2 gerichtete unverschlüsselte Mediendaten 28 durch den Medienserver 10 im Schritt 38 verschlüsselt werden.

Andere Anwendungsmöglichkeiten umfassen beispielsweise das Übertragen von vorbestimmten Mediendaten nur in einer Richtung, beispielsweise von dem Medienserver 10 zu dem ersten Teilnehmergerät 2. Beispielsweise kann eine in dem Kernnetzwerk 7 vorhandene, in der Figur 1 jedoch nicht dargestellte Video-on-Demand Plattform unverschlüsselte Mediendaten 28 an den Medienserver 10 übermitteln. Der Medienserver 10 verschlüsselt im Schritt 38 die gewünschten Mediendaten 28 und übermittelt sie als verschlüsselte Mediendaten 27 an das erste Teilnehmergerät 2.

Anstelle der Vermittlungsstelle 5 kann auch ein so genanntes Kommunikationsgateway treten, das beispielsweise Mediendaten von einem leitungsvermittelnden Zugangsnetzwerk 4 an ein paketvermittelndes Netzwerk wie beispielsweise das Kernnetzwerk 7 oder das zweite Zugangsnetzwerk 6 überträgt. Dadurch wird insbesondere eine Vermittlung zwischen Hardware- und Software-Telefonen bzw. -Telefonanwendungen ermöglicht. Dabei können sich sowohl die Datenformate und Protokolle des Steuerkanals 18A und 18B bzw. des Datenkanals 19A und 19B voneinander unterscheiden, sodass eine Umsetzung der unterschiedlichen Protokolle durch die Anwendungsfunktion 8 bzw. den Medienserver 10 nötig ist. Insbesondere in solchen Anwendungsfällen ist es vorteilhaft, wenn eine Verschlüsselung nur auf einem der Zugangsnetzwerke 4 bzw. 6 eingesetzt werden soll.

Selbstverständlich kann auch zwischen dem zweiten Teilnehmergerät 3 und dem Medienserver 10 eine verschlüsselte Übertragung von Mediendaten stattfinden. Dabei überträgt das zweite Teilnehmergerät 3 seinerseits einen Verschlüsselungsparameter k an die ihm zugeordnete, zweite Anwendungsfunktion 8B. Auf diese Weise werden ausschließlich verschlüsselte Mediendaten 27 über die Datenkanäle 19A und 19B ausgetauscht, ohne dass dazu ein Vertrauensverhältnis zwischen dem ersten Teilnehmergerät 2 und dem zweiten Teilnehmergerät 3 bestehen muss.

## Patentansprüche

1. Verfahren zum Übertragen von Mediendaten mittels eines eine Anwendungsfunktion (8) und einen Medienserver (10) umfassenden, zwischen einem ersten Zugangsnetzwerk (4) und einem zweiten Zugangsnetzwerk (6) angeordneten Kommunikationsgateways (5), aufweisend die Schritte:
- Erzeugen eines Satzes von Verschlüsselungsparametern (k) unter Verwendung eines ersten Schlüssels durch ein über das erste Zugangsnetzwerk (4) mit dem Kommunikationsgateway (5) verbundenes Teilnehmergerät (2),
- Übertragen einer Anfrage (21) von dem Teilnehmergerät (2) an die Anwendungsfunktion (8), wobei die Anfrage (21) den Satz von Verschlüsselungsparametern (k) umfasst,
- Erzeugen eines Verschlüsselungskontextes (CC) aus dem Satz von Verschlüsselungsparametern (k) durch die Anwendungsfunktion (8), wobei der Verschlüsselungskontext (CC) einen zur Verschlüsselung zu verwendenden Schlüssel umfasst,
- Übertragen des Verschlüsselungskontextes (CC) von der Anwendungsfunktion (8) an den Medienserver (10) über eine Steuerschnittstelle (17) eines Kernnetzwerkes (7),
- Verschlüsseln von unverschlüsselten Mediendaten (28) durch den Medienserver (10) unter Verwendung des Schlüssels des Verschlüsselungskontextes (CC), und
- Übertragen der verschlüsselten Mediendaten (27) von dem Medienserver (10) über einen Datenkanal (19A) des ersten Zugangsnetzwerks (4) an das Teilnehmergerät (2).

2. Verfahren zum Übertragen von Mediendaten mittels eines eine Anwendungsfunktion (8) und einen Medienserver (10) umfassenden, zwischen einem ersten Zugangsnetzwerk (4) und einem zweiten Zugangsnetzwerk (6) angeordneten Kommunikationsgateways (5), aufweisend die Schritte:
- Erzeugen eines Satzes von Verschlüsselungsparametern (k) unter Verwendung eines ersten Schlüssels durch ein über das erste Zugangsnetzwerk (4) mit dem Kommunikationsgateway (5) verbundenes Teilnehmergerät (2),
- Übertragen einer Anfrage (21) von dem Teilnehmergerät (2) an die Anwendungsfunktion (8), wobei die Anfrage (21) den Satz von Verschlüsselungsparametern (k) umfasst,
- Erzeugen eines Verschlüsselungskontextes (CC) aus dem Satz von Verschlüsselungsparametern (k) durch die Anwendungsfunktion (8), wobei der Verschlüsselungskontext (CC) einen zur Entschlüsselung zu verwendenden Schlüssel umfasst,
- Übertragen des Verschlüsselungskontextes (CC) von der Anwendungsfunktion (8) an den Medienserver (10) über eine Steuerschnittstelle (17) eines Kernnetzwerkes (7),
- Übertragen von verschlüsselten Mediendaten (27) von dem Teilnehmergerät (2) über einen Datenkanal (19A) des ersten Zugangsnetzwerks (4) an den Medienserver (2), und
- Entschlüsseln der verschlüsselten Mediendaten (27) durch den Medienserver (10) unter Verwendung des Schlüssels des Verschlüsselungskontextes (CC).

3. Verfahren nach Anspruch 1 oder 2, mit dem zusätzlichen Schritt:
- Überprüfen des Satzes von Verschlüsselungsparametern (k) unter Verwendung eines zweiten Schlüssels durch die Anwendungsfunktion (8).

4. Verfahren nach einem der Ansprüche 1 bis 3,
**dadurch gekennzeichnet, dass**
das Teilnehmergerät (2) und die Anwendungsfunktion (8) zum Ausführen eines Sitzungsinitiierungsprotokolls eingerichtet sind und der Satz von Verschlüsselungsparametern (k) durch Austausch von Nachrichten (21, 23, 26) nach dem Sitzungsinitiierungsprotokoll festgelegt wird.

5. Verfahren nach einem der Ansprüche 1 bis 4, mit den zusätzlichen Schritten:
- Überprüfen einer Authentifizierung des Teilnehmergerätes (2) durch die Anwendungsfunktion (8) und
- Übertragen von Authentifizierungsdaten von der Anwendungsfunktion (8) über die Steuerschnittstelle (17) an den Medienserver (10).

6. Verfahren nach einem der Ansprüche 1 bis 5,
**dadurch gekennzeichnet, dass**
die Steuerschnittstelle (17) eine Schnittstelle (15) umfasst, die zum Übertragen von Wertepaaren eingerichtet ist, und im Schritt des Übertragens des Verschlüsselungskontextes (CC) ein Satz von Wertepaaren als codierter Verschlüsselungskontext (24) übertragen wird.

7. Netzwerkanordnung (1), aufweisend
- ein zwischen einem ersten Zugangsnetzwerk (4) und einem zweiten Zugangsnetzwerk (6) angeordneten Kommunikationsgateway (5) mit
- einer Anwendungsfunktion (8) mit einer ersten Verschlüsselungseinheit (12) zum Erzeugen, Aushandeln oder Überprüfen von Sitzungsschlüsseln und einer ersten Schnittstelle (11A) zu dem ersten Zugangsnetzwerk (4),
- einem Medienserver (10) mit einer zweiten Verschlüsselungseinheit (14) und einer zweiten Schnittstelle (13A) zu dem ersten Zugangsnetzwerk (4),
- ein Kernnetzwerk (7) mit einer Steuerschnittstelle (17), über die die Anwendungsfunktion (8) mit dem Medienserver (10) funktionsfähig verbunden ist,
wobei
- ein Teilnehmergerät (2) über einen Steuerkanal (18A) des ersten Zugangsnetzwerks (4) mit der ersten Schnittstelle (11A) der Anwendungsfunktion (8) und über einen Datenkanal (19A) mit der zweiten Schnittstelle (13A) des Medienservers (10) verbunden ist,
- die erste Verschlüsselungseinheit (12) dazu eingerichtet ist, eine Anfrage (21) umfassend einen Satz von Verschlüsselungsparametern (k) von dem Teilnehmergerät (2) auszuwerten, aus dem Satz von Verschlüsselungsparametern (k) einen Verschlüsselungskontext (CC) zu erzeugen, der einen zu einer Verschlüsselung zu verwendenden Schlüssel umfasst, und den Verschlüsselungskontext (CC) über die Steuerschnittstelle (17) an die zweite Verschlüsselungseinheit (14) zu übertragen, und
- die zweite Verschlüsselungseinheit (14) dazu eingerichtet ist, von der zweiten Schnittstelle (13A) empfangene, verschlüsselte Mediendaten (27) unter Verwendung des Schlüssels des Verschlüsselungskontextes (CC) zu entschlüsseln oder unverschlüsselte Mediendaten (28) unter Verwendung des Schlüssels des Verschlüsselungskontextes (CC) zu verschlüsseln und über die zweite Schnittstelle (13A) bereitzustellen.

8. Netzwerkanordnung (1) nach Anspruch 7,
**dadurch gekennzeichnet, dass**
die Steuerschnittstelle (17) eine Entscheidungsfunktion (9) aufweist, die den Zugang zu einzelnen Diensten des Kernnetzwerkes (7) freigibt oder blockiert, wobei die Anwendungsfunktion (8) über eine dritte Schnittstelle (15) mit der Entscheidungsfunktion (9) verbunden ist und die Entscheidungsfunktion (9) über eine vierte Schnittstelle (16) mit dem Medienserver (10) verbunden ist.

9. Netzwerkanordnung (1) nach Anspruch 7 oder 8,
**dadurch gekennzeichnet, dass**
es sich bei der Netzwerkanordnung (1) um ein IP-Multimediasubsystem handelt.

10. Computerprogrammprodukt mit Programmcode zur Ausführung eines Computerprogramms auf einem oder mehreren Computern einer Netzwerkanordnung (1),
**dadurch gekennzeichnet, dass**
bei der Ausführung des Programmcodes ein Verfahren nach einem der Ansprüche 1 bis 6 ausgeführt wird.

## Claims

1. Method for transmitting media data by means of a communication gateway (5) including an application function (8) and a media server (10), arranged between a first access network (4) and a second access network (6), comprising the steps:
- generating a set of encryption parameters (k) using a first key by means of a subscriber device (2) connected via the first access network (4) to the communication gateway (5),
- transmitting a request (21) from the subscriber device (2) to the application function (8), wherein the request (21) includes the set of encryption parameters (k),
- generating an encryption context (CC) from the set of encryption parameters (k) by means of the application function (8), wherein the encryption context (CC) includes a key which is to be used for the encryption,
- transmitting the encryption context (CC) from the application function (8) to the media server (10) via a control interface (17) of a core network (7),
- encrypting unencrypted media data (28) by means of the media server (10) using the key of the encryption context (CC), and
- transmitting the encrypted media data (27) from the media server (10) via a data channel (19A) of the first access network (4) to the subscriber device (2).

2. Method for transmitting media data by means of a communication gateway (5) including an application function (8) and a media server (10), arranged between a first access network (4) and a second access network (6), comprising the steps:
- generating a set of encryption parameters (k) using a first key by means of a subscriber device (2) connected via the first access network (4) to the communication gateway (5),
- transmitting a request (21) from the subscriber device (2) to the application function (8), wherein the request (21) includes the set of encryption parameters (k),
- generating an encryption context (CC) from the set of encryption parameters (k) by means of the application function (8), wherein the encryption context (CC) includes a key which is to be used for the encryption,
- transmitting the encryption context (CC) from the application function (8) to the media server (10) via a control interface (17) of a core network (7),
- transmitting encrypted media data (27) from the subscriber device (2) via a data channel (19A) of the first access network (4) to the media server (2), and
- decrypting encrypted media data (27) by means of the media server (10) using the key of the encryption context (CC).

3. Method according to claim 1 or 2, featuring the additional step:
- checking the set of encryption parameters (k) by means of the application function (8) using a second key.

4. Method according to one of claims 1 to 3,
**characterised in that**
the subscriber device (2) and the application function (8) are configured for implementing a session initiation protocol, and the set of encryption parameters (k) is determined by exchanging messages (21, 23, 26) in accordance with the session initiation protocol.

5. Method according to one of claims 1 to 4, featuring the additional steps:
- checking an authentication of the subscriber device (2) by means of the application function (8) and
- transmitting authentication data from the application function (8) to the media server (10) via the control interface (17).

6. Method according to one of claims 1 to 5,
**characterised in that**
the control interface (17) comprises an interface (15) which is configured for transmitting value pairs, and a set of value pairs is transmitted as an encoded encryption context (24) in the step of transmitting the encryption context (CC).

7. Network arrangement (1) featuring
- a communication gateway (5) arranged between a first access network (4) and a second access network (6) with
- an application function (8) comprising a first encryption unit (12) for generating, negotiating or checking session keys and a first interface (11A) to the first access network (4),
- a media server (10) comprising a second encryption unit (14) and a second interface (13A) to the first access network (4),
- a core network (7) comprising a control interface (17) via which the application function (8) is operatively connected to the media server (10),
wherein
- a subscriber device (2) is connected via a control channel (18A) of the first access network (4) to the first interface (11A) of the application function (8) and via a data channel (19A) to the second interface (13A) of the media server (10),
- the first encryption unit (12) is configured for analyzing a request (21) which includes a set of encryption parameters (k) from the subscriber device (2), for generating an encryption context (CC) including a key that is to be used for encryption from the set of encryption parameters (k), and for transmitting the encryption context (CC) via the control interface (17) to the encryption unit (14), and
- the second encryption unit (14) is configured for decrypting encrypted media data (27) which is received from the second interface (13A) using the key of the encryption context (CC), or for encrypting unencrypted media data (28) using the key of the encryption context (CC) and providing it via the second interface (13A).

8. Network arrangement (1) according to claim 7,
**characterised in that**
the control interface (17) has a decision function (9) which enables or disables access to individual services of the core network (7), wherein the application function (8) is connected via a third interface (15) to the decision function (9) and the decision function (9) is connected via a fourth interface (16) to the media server (10).

9. Network arrangement (1) according to claim 7 or 8,
**characterised in that**
the network arrangement (1) is an IP multimedia subsystem.

10. Computer program product comprising program code for executing a computer program on one or more computers of a network arrangement (1),
**characterised in that**
a method according to one of claims 1 to 6 is implemented when the program code is executed.

## Revendications

1. Procédé de transmission de données média au moyen d'une passerelle de communication (5) comprenant une fonction d'application (8) et un serveur média (10) et agencée entre un premier réseau d'accès (4) et un deuxième réseau d'accès (6), comportant les étapes suivantes :
- génération d'un jeu de paramètres de cryptage (k) avec utilisation d'une première clé par un appareil d'abonné (2) connecté à la passerelle de communication (5) via le premier réseau d'accès (4) ;
- transmission d'une requête (21) de l'appareil d'abonné (2) à la fonction d'application (8), la requête (21) comprenant le jeu de paramètres de cryptage (k) ;
- génération d'un contexte de cryptage (CC) à partir du jeu de paramètres de cryptage (k) par la fonction d'application (8), le contexte de cryptage (CC) comprenant une clé à utiliser pour le cryptage ;
- transmission du contexte de cryptage (CC) de la fonction d'application (8) au serveur média (10) via une interface de commande (17) d'un réseau coeur (7) ;
- cryptage de données média non cryptées (28) par le serveur média (10) avec utilisation de la clé du contexte de cryptage (CC) et
- transmission des données média cryptées (27) du serveur média (10) à l'appareil d'abonné (2) via un canal de données (19A) du premier réseau d'accès (4).

2. Procédé de transmission de données média au moyen d'une passerelle de communication (5) comprenant une fonction d'application (8) et un serveur média (10) et agencée entre un premier réseau d'accès (4) et un deuxième réseau d'accès (6), comportant les étapes suivantes :
- génération d'un jeu de paramètres de cryptage (k) avec utilisation d'une première clé par un appareil d'abonné (2) connecté à la passerelle de communication (5) via le premier réseau d'accès (4) ;
- transmission d'une requête (21) de l'appareil d'abonné (2) à la fonction d'application (8), la requête (21) comprenant le jeu de paramètres de cryptage (k) ;
- génération d'un contexte de cryptage (CC) à partir du jeu de paramètres de cryptage (k) par la fonction d'application (8), le contexte de cryptage (CC) comprenant une clé à utiliser pour le décryptage ;
- transmission du contexte de cryptage (CC) de la fonction d'application (8) au serveur média (10) via une interface de commande (17) d'un réseau coeur (7) ;
- transmission de données média cryptées (27) de l'appareil d'abonné (2) au serveur média (2) via un canal de données (19A) du premier réseau d'accès (4) et
- décryptage des données média cryptées (27) par le serveur média (10) avec utilisation de la clé du contexte de cryptage (CC).

3. Procédé selon la revendication 1 ou 2, comportant l'étape supplémentaire suivante :
- vérification du jeu de paramètres de cryptage (k) avec utilisation d'une deuxième clé par la fonction d'application (8).

4. Procédé selon l'une des revendications 1 à 3, **caractérisé en ce que** l'appareil d'abonné (2) et la fonction d'application (8) sont configurés pour exécuter un protocole d'initialisation de session et **en ce que** le jeu de paramètres de cryptage (k) est déterminé par échange de messages (21, 23, 26) conformément au protocole d'initialisation de session.

5. Procédé selon l'une des revendications 1 à 4, comportant les étapes supplémentaires suivantes :
- vérification d'une authentification de l'appareil d'abonné (2) par la fonction d'application (8) et
- transmission de données d'authentification de la fonction d'application (8) au serveur média (10) via l'interface de commande (17).

6. Procédé selon l'une des revendications 1 à 5, **caractérisé en ce que** l'interface de commande (17) comprend une interface (15) qui est configurée pour transmettre des paires de valeurs et **en ce qu'**est transmis, à l'étape de transmission du contexte de cryptage (CC), un jeu de paires de valeurs en tant que contexte de cryptage codé (24).

7. Agencement de réseau (1) comportant :
- une passerelle de communication (5) agencée entre un premier réseau d'accès (4) et un deuxième réseau d'accès (6), comportant :
o une fonction d'application (8) avec une première unité de cryptage (12) pour générer, négocier ou vérifier des clés de session, et une première interface (11A) vers le premier réseau d'accès (4) ;
o un serveur média (10) avec une deuxième unité de cryptage (14) et une deuxième interface (13A) vers le premier réseau d'accès (4) ;
- un réseau coeur (7) avec une interface de commande (17) via laquelle la fonction d'application (8) est connectée de manière fonctionnelle au serveur média (10),
- un appareil d'abonné (2) étant connecté à la première interface (11A) de la fonction d'application (8) via un canal de commande (18A) du premier réseau d'accès (4) et à la deuxième interface (13A) du serveur média (10) via un canal de données (19A) ;
- la première unité de cryptage (12) étant configurée pour évaluer une requête (21) comprenant un jeu de paramètres de cryptage (k) de l'appareil d'abonné (2), pour générer, à partir du jeu de paramètres de cryptage (k), un contexte de cryptage (CC) qui comprend une clé à utiliser pour un cryptage, et pour transmettre le contexte de cryptage (CC) à la deuxième unité de cryptage (14) via l'interface de commande (17) ; et
- la deuxième unité de cryptage (14) étant configurée pour décrypter des données média cryptées (27) reçues de la deuxième interface (13A) en utilisant la clé du contexte de cryptage (CC) ou pour crypter des données média non cryptées (28) en utilisant la clé du contexte de cryptage (CC) et les fournir via la deuxième interface (13A).

8. Agencement de réseau (1) selon la revendication 7, **caractérisé en ce que** l'interface de commande (17) comporte une fonction de décision (9) qui libère ou bloque l'accès à certains services du réseau coeur (7), la fonction d'application (8) étant connectée à la fonction de décision (9) via une troisième interface (15) et la fonction de décision (9) étant connectée au serveur média (10) via une quatrième interface (16).

9. Agencement de réseau (1) selon la revendication 7 ou 8, **caractérisé en ce que** l'agencement de réseau (1) est un sous-système multimédia IP.

10. Produit de programme informatique comportant un code de programme pour exécuter un programme informatique sur un ou plusieurs ordinateurs d'un agencement de réseau (1), **caractérisé en ce que**, lors de l'exécution du code de programme, un procédé selon l'une des revendications 1 à 6 est exécuté.
